Europäisches Patentamt

European Patent Office

Office européen des brevets

(19)

(11) **EP 0 394 362 B1**

(12) # EUROPEAN PATENT SPECIFICATION

(45) Date of publication and mention
of the grant of the patent:
**09.07.1997 Bulletin 1997/28**

(21) Application number: **89902461.6**

(22) Date of filing: **01.02.1989**

(51) Int Cl.6: **G06F 9/46**, G06F 15/16

(86) International application number:
**PCT/US89/00395**

(87) International publication number:
**WO 89/07299 (10.08.1989 Gazette 1989/18)**

(54) **METHOD AND APPARATUS FOR ALIGNING THE OPERATION OF A PLURALITY OF PROCESSORS**

VERFAHREN UND VORRICHTUNG ZUR STEUERUNG DES BETRIEBSGLEICHLAUFES EINER VIELZAHL VON PROZESSOREN

PROCEDE ET APPAREIL D'EXPLOITATION EN LIGNE DE PLUSIEURS PROCESSEURS

(84) Designated Contracting States:
**AT BE CH DE FR GB IT LI LU NL SE**

(30) Priority: **02.02.1988 US 151386**

(43) Date of publication of application:
**31.10.1990 Bulletin 1990/44**

(73) Proprietor: **THINKING MACHINES CORPORATION
Cambridge Massachusetts 02142 (US)**

(72) Inventor: **HILLIS, W., Daniel
Brookline, MA 02146 (US)**

(74) Representative: **Grünecker, Kinkeldey,
Stockmair & Schwanhäusser Anwaltssozietät
Maximilianstrasse 58
80538 München (DE)**

(56) References cited:
EP-A- 0 388 052       US-A- 4 229 790
US-A- 4 330 826       US-A- 4 394 725
US-A- 4 399 504       US-A- 4 554 626
US-A- 4 733 353       US-A- 4 775 934

- **PROCEEDINGS OF THE INTERNATIONAL WORKSHOP ON PARALLEL ALGORITHMS & ARCHITECTURES 14 April 1986, LUMINI, FRANCE pages 109 - 125; P. QUINTON: 'Distributed synchronization of parallel programs: why and how?'**
- **COMPUTER. vol. 21, no. 2, February 1988, LONG BEACH US MICHEL DUBOIS: 'Synchronization, coherence and event ordering in multiprocessors'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Background of the Invention

This relates to multi-processors and in particular to a system for aligning the operation of a plurality of processors in a multi-processor.

Numerous multi-processors are known in the art. See Wang, A. and Brigg, F.A., Computer Architecture in Parallel Processing, (McGraw Hill, 1984). Illustrative such systems include the Illiac-IV, the Burroughs Scientific Processor (BSP) manufactured by Burroughs Corporation (now Unisys), the Massively Parallel Processor (MPP) developed at the NASA Goddard Space Flight Center and manufactured by Goodyear Aerospace, the DAP manufactured by ICL of England, the STARAN designed by Goodyear Aerospace, the IBM 370/168 MP and IBM 3081/3084 both manufactured by International Business Machines, the Univac 1100/80 manufactured by Sperry Univac (now Unisys), Tandem-16 Nonstop, D-825 manufactured by Burroughs Corporation (now Unisys), the HEP manufactured by Denelcor Inc., the Cray X-MP and Cray-2 each manufactured by Cray Research Inc., and the Cm* and C.mmp, each developed at Carnegie Mellon University.

Recently, multi-processors have been introduced in which thousands of processors are operated in parallel. One such processor is the Connection Machine Computer being manufactured and sold by the assignee of the present application and described more fully in U.S. Patent 4,598,400. The Connection Machine Computer comprises a central computer, a microcontroller, and an array of as many as 65,536 parallel processors in presently available embodiments. The central computer may be a suitably programmed commercially available computer such as a Symbolics 3600-series LISP Machine. The microcontroller is an instruction sequencer of conventional design for generating a sequence of instructions that are applied to the array of parallel processors by means of a thirty-two bit parallel bus. The microcontroller receives from the parallel processing array a signal which is a general purpose or GLOBAL signal that can be used for data output and status information.

Common to all multi-processors are problems of synchronizing the operations of the multi-processor so as to make it possible for individual multi-processors to exchange information. These problems can be avoided by operating all the processors of the multi-processor in a single instruction stream, multiple data stream (SIMD) environment in which all processing units receive the same instruction stream in parallel although they operate on different data. It is advantageous, however, to be able to operate the processors of a multi-processor independently to the extent that each processor operates on its own instruction stream in a multiple instruction stream, multiple data stream (MIMD) environment.

As is known from US-A-4 229 790, synchronization may be effected by having each processor set a bit in a register when the processor reaches a point in its program where it is to be aligned with other processors. Upon reaching this synchronization point, each processor tests the register to determine if all bits have been properly set and no processor goes forward in its program until all such bits have been set. As a result of this technique, processors may be brought into strict time synchronization such that at each synchronization point each processor performs a predetermined operation at the same time.

"Distributed synchronisation of parallel programs: why and how" by P. Quinton in Proc. of the International Workshop on parallel Algorithms and Architectures, Lumini, France, 14.04.1986 gives general background a synchronisation of parallel instruction streams.

### Summary of the Invention

In many operations, it is not necessary to achieve strict time synchronization in the operations of a plurality of processors. Rather it is sufficient to ensure simply that each processor has performed a specified task before any processor can initiate another specified task. This less strict form of synchronization is referred to herein as alignment. In accordance with the invention, a method and apparatus have been devised for aligning a plurality of multi-processors. The apparatus preferably comprises an alignment unit associated with each processor and a logic network for combining the output of the alignment units and for broadcasting information to these units. Alignment is achieved by inserting in the instruction stream from each processor that is to be aligned a request for alignment and by causing all such processors to wait until they have all made the request for alignment and completed any necessary operations.

The alignment unit associated with each processor monitors the instruction stream to detect a request for alignment. The logic network illustratively is an array of AND gates that tests each alignment unit to determine if it has detected a request for alignment and tests the processors and/or their interconnection network to determine if all necessary operations have been completed. When all the units have made such a request and all necessary operations have been completed, the logic network informs the alignment units; and the alignment units inform the processors.

Claims 1 and 9 do set out a system and a method, respectively according to the invention.

Brief Description of the Drawings

These and other objects, features and advantages of the invention will become more readily apparent from the following detailed description of the invention in which:

Fig. 1 is a block diagram illustrating an illustrative embodiment of a multi-processor which incorporates the invention;

Fig. 2 is a block diagram illustrating an illustrative embodiment of the alignment unit of the present invention;

Fig. 3 is an illustrative embodiment of a unit of combinatorial logic of the present invention;

Fig. 4 is a state diagram illustrating the operation of the alignment unit of Fig. 2; and

Fig. 5 is a block diagram of a second illustrative embodiment of the invention.

Detailed Description of the Invention

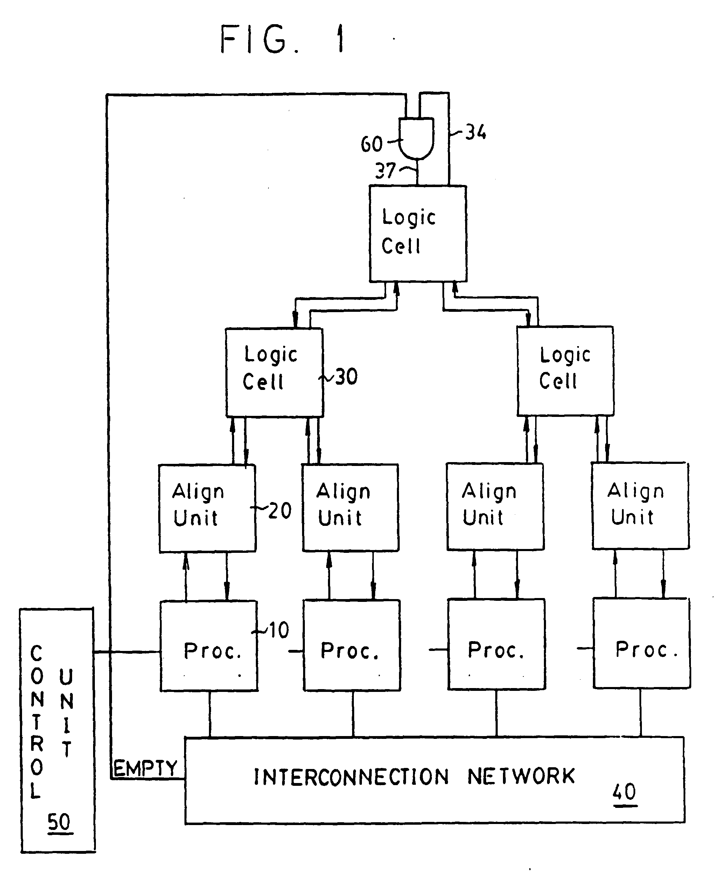

As shown in Fig. 1, illustrative apparatus of the present invention comprises an array of processors 10, an array of alignment units 20, an array of combinatorial logic cells 30, an interconnection network 40 and a control unit 50. Illustratively, each processor includes an arithmetic/logic unit, a read/write memory, and input and output means. Numerous such processors are well known in the art. Illustratively, each processor is an 80386-type microprocessor such as that made by Intel Corporation.

Interconnection network 40 provides for communication between the processors. In particular, it permits the exchange of data and control information between one processor and another. Numerous interconnection networks are known in the art. See for example Wu, C. and Feng, T, <u>Tutorial: Interconnection Network for Parallel and Distributed Processing</u> (IEEE, 1984). Illustrative communication networks are arrangements which connect each processor to its nearest neighbor in an orthogonal array of two or more dimensions. Two such networks are described in the above referenced '400 patent and numerous others are known in the art.

The processors and interconnection network are typically operated under the control of some type of control unit 50. In the case of the processors and interconnection network of the Connection Machine Computer, an illustrative control unit is a Symbolics 3600 Series LISP machine and a microcontroller. Numerous other control units are used with other multi-processors.

If there is communication among the processors of a multi-processor, it may be necessary to assure that one processor has reached a certain step in its operation before another processor can perform a specified operation. For example, if data is to be fetched from a first processor to a second, it is necessary to ensure that the data be in the first processor before the fetch occurs. To ensure that the data is there when needed, it is necessary to align the individual processors. This can be achieved by operating all the processors strictly in parallel in a SIMD environment. However, in many cases it may be advantageous to operate the processors in a MIMD environment and align only where needed.

In accordance with the invention, alignment is achieved among a group of processors by inserting in the instruction stream of each of these processors two additional instructions: a request for alignment and a test if alignment has been achieved. Typically, the request for alignment instruction is issued at or after the time the instruction stream issues an instruction (such as a communication instruction) which will require the processors to be in alignment at some later time; and the test instruction is issued immediately before the point in the instruction stream where alignment must have been achieved.

For example, let us assume that data is to be transferred from each processor in a group of processors to its neighboring processor and combined with data at that processor. If we identify a pair of neighboring processors in the group of processors as processor i-1 and processor i, the following instruction stream may be provided to each processor in the group to combine such data at each processor:

01   Send Data from Processor i-1 to Register A of Processor i
02   Move Data from Register B to Register C of Processor i
03   Add Contents of Register A to Contents of Register C of Processor i

It is clearly necessary that the proper data be in Register A before it is added to the contents of Register C. To ensure this, it is necessary to align the operations of the processors.

In accordance with the present invention, such alignment is accomplished by inserting request and test instructions in the instruction stream so that for the above example the instruction stream is as follows:

01   Send Data from Processor i-1 to Register A of Processor i
02   Request alignment

03    Move Data from Register B to Register C of Processor i
04    Test if aligned
05    If false, reexecute Test
06    If true, Add Contents of Register A to Contents of Register C of Processor i

In accordance with the invention, the request and test instructions are inserted in the instruction stream from each processor to be aligned and all the processors wait at the test instruction until all the processors have asserted the request instruction.

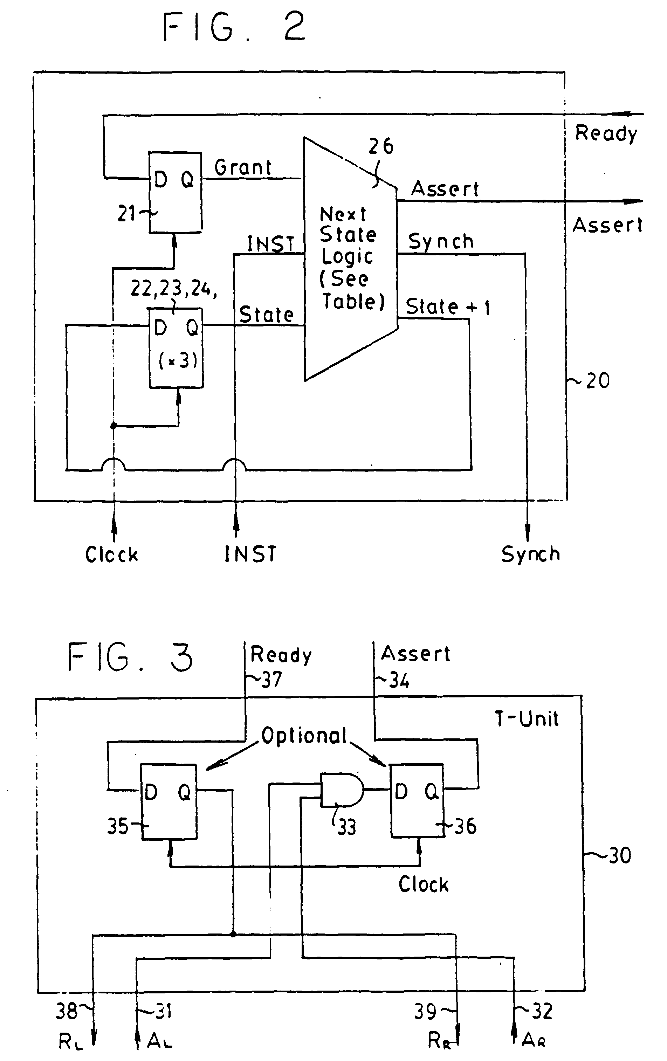

Preferred apparatus for processing such request and test instructions comprises alignment units 20 and combinatorial logic cells 30 of the apparatus of Fig. 1. As shown in Fig. 1, each processor 10 is connected to an alignment unit so as to provide signals to such unit and to receive signals from it. As depicted in Fig. 2, each alignment unit 20 comprises four D-type flip flops 21, 22, 23, 24 and combinatorial logic 26 which implements the input/output table set forth in Table I. As shown in Fig. 3, each logic cell 30 comprises an AND gate 33 and optionally two D-type flip flops 35, 36. The logic cells are connected in the form of a binary tree with each logic cell in the lowest level of the tree being connected to a pair of alignment units 20.

TABLE I

| INPUTS | | | OUTPUTS | | |
|---|---|---|---|---|---|
| State | INST | GRANT | State+1 | ALIGN | ASSERT |
| IDLE | TEST | LOW | ERROR | X | X |
| IDLE | TEST | HIGH | ERROR | X | X |
| IDLE | REQ | LOW | PEND | LOW | LOW |
| IDLE | REQ | HIGH | ERROR | X | X |
| IDLE | OTHER | LOW | IDLE | LOW | LOW |
| IDLE | OTHER | HIGH | ERROR | X | X |
| PEND | TEST | LOW | PEND | LOW | HIGH |
| PEND | TEST | HIGH | BLOCK | HIGH | HIGH |
| PEND | REQ | LOW | ERROR | X | X |
| PEND | REQ | HIGH | ERROR | X | X |
| PEND | OTHER | LOW | PEND | LOW | HIGH |
| PEND | OTHER | HIGH | GOT | HIGH | HIGH |
| GOT | TEST | LOW | IDLE | HIGH | LOW |
| GOT | TEST | HIGH | BLOCK | HIGH | LOW |
| GOT | REQ | LOW | ERROR | X | X |
| GOT | REQ | HIGH | ERROR | X | X |
| GOT | OTHER | LOW | SAVE | HIGH | LOW |
| GOT | OTHER | HIGH | GOT | HIGH | LOW |
| SAVE | TEST | LOW | IDLE | HIGH | LOW |
| SAVE | TEST | HIGH | ERROR | X | X |
| SAVE | REQ | LOW | ERROR | X | X |
| SAVE | REQ | HIGH | ERROR | X | X |
| SAVE | OTHER | LOW | SAVE | HIGH | LOW |
| SAVE | OTHER | HIGH | ERROR | X | X |
| BLOCK | TEST | LOW | ERROR | X | X |
| BLOCK | TEST | HIGH | ERROR | X | X |
| BLOCK | REQ | LOW | PEND | LOW | LOW |
| BLOCK | REQ | HIGH | QUEUE | LOW | LOW |
| BLOCK | OTHER | LOW | IDLE | LOW | LOW |
| BLOCK | OTHER | HIGH | BLOCK | LOW | LOW |
| QUEUE | TEST | LOW | PEND | LOW | LOW |
| QUEUE | TEST | HIGH | QUEUE | LOW | LOW |
| QUEUE | REQ | LOW | ERROR | X | X |
| QUEUE | REQ | HIGH | ERROR | X | X |

TABLE I   (continued)

| INPUTS | | | OUTPUTS | | |
|---|---|---|---|---|---|
| State | INST | GRANT | State+1 | ALIGN | ASSERT |
| QUEUE | OTHER | LOW | PEND | LOW | LOW |
| QUEUE | OTHER | HIGH | QUEUE | LOW | LOW |

Each alignment unit receives from the processor to which it is connected the instruction stream INST being executed by the processor. In accordance with the input/output table of Table I as described more fully below, each alignment unit provides to its processor a signal ALIGN indicating whether or not alignment has been achieved. In addition, each alignment unit also provides an output signal ASSERT to an input of the logic cell to which it is connected and it receives from that logic cell a READY signal which is applied to flip-flop 21 and then to combinatorial logic 26.

AND gate 33 of logic cell 30 receives ASSERT signals on input lines 31, 32 and produces an output ASSERT signal on output line 34 (optionally, via flip-flop 36). In the specific embodiment of the invention shown in Fig. 3, a logic high signal is not asserted on an output line 34 until logic high signals are asserted on both input signal lines 31, 32 to AND gate 33. The output ASSERT signals from two cells are applied as the two inputs to a logic cell 30 in the next higher level of the binary tree.

The uppermost cell in the AND tree has an output line 34 which is input to an AND gate 60 along with a signal from interconnection network 10 which indicates that the interconnection network is empty. The network is empty whenever there are no messages being routed through the network. A test for this condition is conventional in some interconnection networks and the provision of a signal indicating that the network is empty is within the ordinary skill of the art. In the preferred embodiment shown in Fig. 1, a test for an empty network is made to ensure that message traffic on the interconnection network is completed.

Upon coincidence of a logic high empty signal and a logic high signal on the assert output 34 of the uppermost cell, a ready signal is applied by AND gate 60 to an input ready line 37 to the uppermost cell of the binary tree. This signal is provided to two output ready lines 38, 39 (optionally, via flip-flop 35) which are connected respectively to the input ready lines of two cells in the next lower level of the binary tree. At the lowest level of the binary tree, the READY signal is provided by each cell to two alignment units 20 so that the READY signal is broadcast to the entire array of alignment units 20.

In general, the operation of alignment units 20 and logic cells 30 is such that a logic high signal is output on the ASSERT line from an alignment unit when that unit detects a REQUEST for alignment signal in the instruction stream received at the alignment unit. If and only if each alignment unit detects a REQUEST for alignment signal, output line 34 from the uppermost logic cell 30 in the binary tree will be logic high. If message traffic on processor interconnection network 10 is completed at some point after all the processors issue a REQUEST for alignment, then the empty signal will become logic high as well and the output of AND gate 60 will become logic high. As a result, a logic high READY signal will be broadcast down through logic cells 30 to all the alignment units where the logic high READY signal is recognized as a GRANT signal.

The GRANT signal is processed by each alignment unit so as to output to the processor a single logic high ALIGN instruction for each TEST instruction in the instruction stream from the processor. If the GRANT signal is received before the TEST signal in the instruction stream, each alignment unit simply stores the GRANT signal and waits. If the TEST signal is received first, the alignment unit likewise just waits. Upon receipt of both TEST and GRANT signals, the alignment unit issues a logic high ALIGN signal to the processor, and the processor is then enabled to perform the operation for which alignment was required.

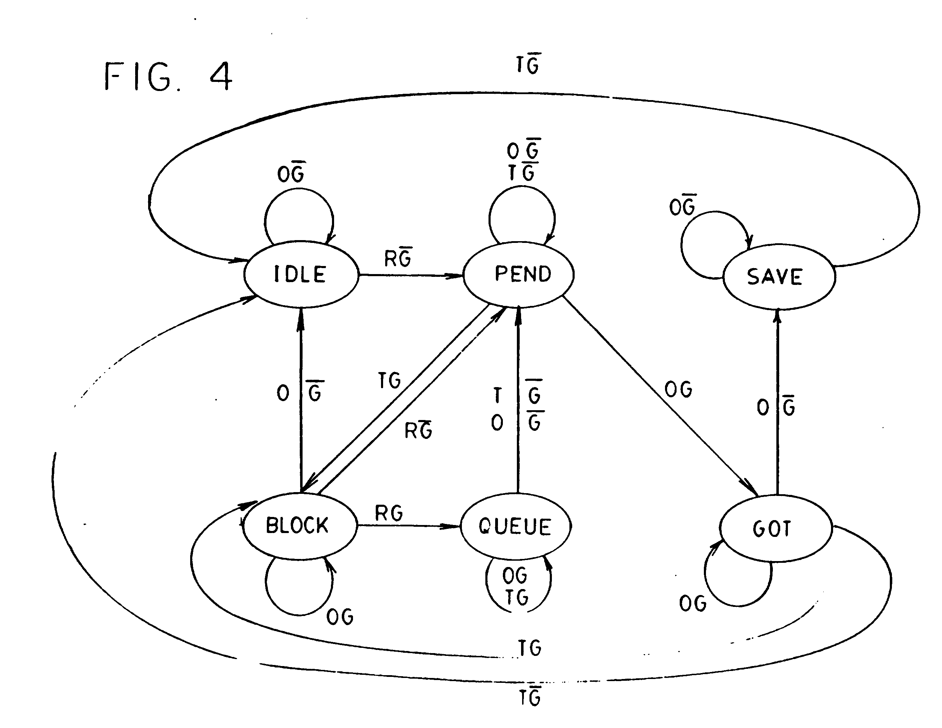

Further details of the operation of the alignment unit are best explained in conjunction with Table I and the state diagram of Fig. 4, which depict the operation of alignment unit 20 and its combinatorial logic 26 and flip-flops 22-24. As shown in Fig. 4, the alignment unit can be in any one of six states: IDLE, PENDING, BLOCKING, QUEUE, GOT and SAVE. The state of the alignment unit is stored in binary encoded form in flip-flops 22, 23, 24 and is provided as an input to combinatorial logic 26 along with the instruction stream INST from the processor and the GRANT signal from flip-flop 21. The instruction stream is the sequence of instructions that is provided to the processor and, in accordance with the invention includes three types of instructions: REQUEST for alignment, TEST, and all OTHER instructions which are represented in Fig. 4 by the symbols R, T and O respectively. The logic high GRANT signal is represented in Fig. 4 by G and the logic low GRANT signal by $\overline{G}$.

The different combinations of inputs to combinatorial logic 26 are set forth in the three left-hand columns of Table I. The outputs produced by combinatorial logic 26 in response to these inputs are set forth in the three right-hand columns of Table I. As indicated, one output specifies the next state of the alignment unit and the other two specify the logic level of the ALIGN and ASSERT lines. In cases where some combination of inputs is not possible, the next state has been indicated to be an ERROR and the ALIGN and ASSERT levels have been left undefined.

The apparatus of Fig. 1 is initialized so that the alignment units are in the IDLE state. Ordinarily, each alignment unit is in the IDLE state and remains so upon receipt of any instruction in the instruction stream from the processor except for a REQUEST instruction. This is indicated by the loop labelled $\overline{OG}$. While in the IDLE state both the ALIGN and ASSERT outputs are logic low. The alignment unit changes to the PENDING state upon receipt of a REQUEST signal as detailed below; and in the PENDING state causes the ASSERT output to be logic high. If and when the ASSERT outputs of all the alignment units become logic high and the interconnection network is empty, the GRANT signal will become logic high and causing the GRANT signal to be logic high each alignment unit will producing output signals as specified in Table I. The alignment unit will ultimately return to the IDLE state if a TEST instruction and a logic low GRANT signal are received.

As indicated, if a REQUEST signal is detected in the instruction stream and if a logic high GRANT signal has not been received from the logic cells, the alignment unit changes from the IDLE state to the PENDING state as indicated by the line $\overline{RG}$ in Fig. 4 and the third line of Table I. Once in the PENDING state, the alignment unit will stay there unless a logic high GRANT signal is received. While in the PENDING state, combinatorial logic 26 will issue a logic high ASSERT signal for any of the possible combination of input signals. The ASSERT signals are applied to the inputs to logic cells 30; and if all the ASSERT signals are logic high and if the connection network is empty a logic high READY will be broadcast to all the alignment units indicating that all the processors have completed the instruction (such as a communication instruction) they were required to complete and accordingly are aligned. This logic high READY signal is the logic high GRANT signal of Table I. If a logic high GRANT signal is received along with an OTHER instruction, the unit changes to the GOT state as indicated by the line OG in Fig. 4 and the twelfth line of Table I and issues a logic high ALIGN signal while continuing to issue a logic high ASSERT signal.

If any OTHER instruction continues to be received and the GRANT signal continues to be logic high, the combinatorial logic remains in the GOT state, but drops the ASSERT signal to logic low which causes the GRANT signal to become logic low. If the GRANT signal is logic low while an OTHER instruction is received, the alignment unit switches to the SAVE state where it remains until a TEST instruction is received and then returns to the IDLE state.

If, however, a TEST instruction is received while the unit is in the GOT state, the unit changes to the BLOCKING state if the GRANT signal is logic high or to the IDLE state if the GRANT signal is logic low and causes the ASSERT signal to become logic low.

The BLOCKING state prevents other alignment operations from being performed. Upon receipt of any OTHER instruction at the alignment unit while it is in the BLOCKING state and the GRANT signal is low, the unit returns to the IDLE state as indicated by the line $\overline{OG}$ between the BLOCKING and IDLE states. If, however, another REQUEST instruction is received, the alignment unit returns to the PENDING state if the GRANT signal is logic low or to the QUEUE state if the GRANT signal is logic high. The unit will remain in QUEUE as long as the GRANT signal is high and will return to PENDING when the GRANT signal goes low.

Alternatively, while in the PENDING state, if the alignment unit receives the TEST instruction while the GRANT signal is logic high, it will change to the BLOCKING state. Further operations in the BLOCKING state will be the same as described above.

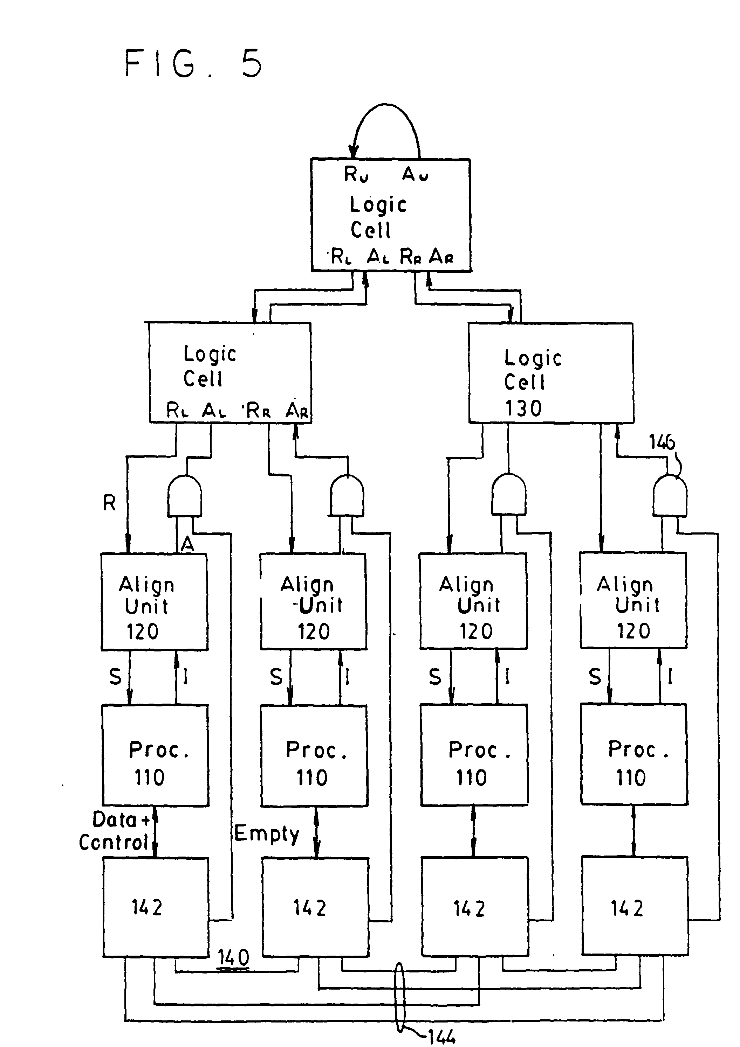

An alternative embodiment of the invention is disclosed in Fig. 5. As shown therein, the apparatus comprises an array of processors 110, an array of alignment units 130, an array of combinatorial logic cells 130 and an interconnection network 140. The processors 110, alignment units 120 and combinatorial logic cells 130 may be the same as processors 10, alignment units 20 and logic cells 30 of Fig. 1 and processors 110 may be controlled by a control unit that is not shown. Interconnection network 140, however, is different from that of network 40 in that it is implemented in the form of separate routers 142 and connection paths 144 between each pair of processors.

In such a case, it is possible to test for the absence of message traffic in the interconnection network by testing on a processor by processor basis. Thus as shown in Fig. 5, the router for each processor produces an output signal which is a logic high when there is no message traffic on the connection paths to or from the processor with which it is associated. This signal is applied as one input to an AND gate 146 which has as a second input the output of the alignment unit 130 associated with that processor. As a result, a high logic signal is provided by AND gate 146 to an input to logic cell 130 when there is no message traffic in the portion of the interconnection network associated with that processor and a logic high ASSERT signal has been generated by the alignment unit. As will be apparent, this changes the location of the test for no message traffic from the uppermost cell in the binary tree of logic cells 30 of Fig. 1 to the lowermost cells in the binary tree of logic cells 130 of Fig. 5. In other respects the operation of the alignment units and logic cells is the same as described for Figs. 1-4.

The invention may be practiced in numerous environments. For example, if the processors are Intel 80386 microprocessors, the invention may be practiced using the IN and OUT instructions of the 80386 instruction set to provide instructions to an alignment unit and receive an ALIGN signal from such unit.

Illustrative code comprises:

| 1. | MOV | AL, 5 | load an address, 5, of the processor to which data is to be sent |
|---|---|---|---|
| 2. | OUT | sending device, AL | send data via sending device |
| 3. | ADD | AL, CL | compute data of message |
| 4. | OUT | sending device, AL | send data via sending device |
| 5. | MOV | AL, 1 | load into AL a 1-bit representing a request for alignment |
| 6. | OUT | align unit, AL | send the 1-bit in register AL to the alignment unit 20 |
| . | | | |
| . | | | |
| . | | | |
| 20. | IN | AL, align unit | load the ALIGN signal from the alignment unit into register AL |
| 21. | TEST | AL, 1 | test if the signal in register AL is a 1-bit |
| 22. | INE | 20 | if not, return to instruction at line 20 |
| 23. | IN | AL, receiving device | if it is a 1-bit, proceed with program illustratively by loading signals from receiving device into register AL |

In the practice of the invention, the request for alignment is made by each processor wherever it is necessary for inter-processor communications to have been completed before the processor can continue with its program. In the illustrative code set forth above, the request for alignment is made at line 6. The requests for alignment are processed by the alignment units 20 associated with each processor and are forwarded to logic cells 30 as logic high ASSERT signals. These requests are ANDed together by logic cells 30 and when all processors have made such a request a logic high signal is applied to AND gate 60. If the interconnection network is empty, a logic high READY signal is broadcast by AND gate 60 to all the alignment units 20 via logic cells 30.

In the illustrative code set forth above, the logic level of the READY or GRANT signal is monitored by the instructions at lines 20, 21, and 22, which respectively read this signal level, test if it is a 1-bit or logic high, and recycle if the 1-bit has not been received. These instructions provide the function of the TEST instruction and the ALIGN signal of Table I.

The processors are all aligned at the time the READY signal goes logic high which occurs at some point between the request for alignment at line 6 and the time each processor initiates a successful test for a 1-bit in the AL register as at lines 20-23. It is not necessary, however, that each processor make such a test at the same time; and it is not necessary that the first such test be made after the READY signal goes logic high. If the logic high READY signal is received before the program reaches lines 20-21, the alignment unit will save that information until those lines are reached; and if the READY signal is still logic low when the program reaches line 20, the program will simply loop through the instructions at lines 20-22 until the READY signal goes logic high.

As will be apparent to those skilled in the art, numerous modifications may be made in the practice of the invention. For example, while the invention has been described in terms of apparatus (AND gate 60) which tests for completion of communication on an interconnection network, it may be desirable to make other tests in place of or in addition to such a test of the communication network. Thus, if the computer systems includes mathematics co-processors or the software includes various subroutines whose outputs might alter data to be communicated from one processor to another, it will be desirable to test such equipment or operations to make sure they have completed their tasks before issuing the READY signal to the processors. Such a test can readily be made by using a global OR network to test the state of an activity flag associated with each hardware or software element whose operation must be completed before the program can proceed.

**Claims**

1. A computer system (FIG. 1) comprising:

    A. a plurality of processors (10) each for processing a separate instruction stream,

        (i) each instruction stream comprising a sequence of instructions of a plurality of diverse instruction types including an alignment request type,

        (ii) at least one instruction stream further including, situated in the instruction stream to be executed at a later point in time than the instruction of the alignment request type, at least one instruction of another type followed by an instruction of an alignment test type,

each processor having

means for generating an alignment request indication while processing an instruction of said alignment request type,

means for generating an alignment test indication while processing an instruction of said alignment test type,

means for inhibiting the processing of instructions after said instruction of the alignment test type until after the processor receives an alignment indication; and

B. an alignment network (20, 30, 34, 37) for generating an alignment indication for each said processor in response to receipt therefrom of an alignment test indication following generation of alignment request indications by all of said processors.

2. A system as defined in claim 1 in which instruction streams of all of said processors include, situated in the instruction stream to be executed at a later point in time than the instruction of the alignment request type, at least one instruction of another type followed by an instruction of an alignment test type.

3. A computer system as defined in claim 1 in which said alignment network comprises:

A. associated with each processor:

i. an alignment state circuit (26) having a first state, a second state in which it generates a request for alignment, and a third state in which it generates an alignment indication;

ii. a state control circuit (22, 23, 24) for enabling said alignment state circuit to:

a. shift from said first state to said second state to thereby generate a request for alignment in response to the associated processor receiving an instruction in its instruction stream of the alignment request type,

b. shift from said second state to said third state to thereby generate an alignment indication in response to coincidence of the assertion of a ready signal and the processor receiving an instruction in its instruction stream of the alignment test type, and

c. shift from said third state to said first state in response to negation of said ready signal; and

B. coincidence test means (30, 34, 37) for asserting said ready signal in response to said alignment state means associated with all of said processors generating requests for alignment, and otherwise maintaining said ready signal in a negated condition.

4. A computer system as defined in claim 3 in which said coincidence test means generates said ready signal as the coincidence of requests for alignment from all of said processors.

5. A computer system as defined in claim 4 in which said coincidence test means comprises a plurality of logic cells (30) connected in a tree structure defining a root logic cell (in FIG. 1, the single logic cell 30 at the top of the "tree") and a plurality of leaf logic cells (in FIG. 1, the set of logic cells 30 connected directly to the alignment units 20), each logic cell including a coincidence circuit ( 33) that generates an output signal that is coupled to its parent in response to reception of input signals from a plurality of children, each leaf cell having as input signals alignment request signals ("Assert" in FIG. 2) from a predetermined number of alignment state circuits and generating as an output signal an assert signal ("Assert 34"), the logic cells propagating the assert signals to the root cell, the root logic cell including a ready indication generating circuit (34, 37) for generating the ready indication for coupling to all of said alignment state control circuits.

6. A computer system as defined in claim 5 in which each logic cell further includes a latch circuit (36) for latching the output signal from said coincidence circuit in response to a clock signal, the latch circuit generating a latched output signal that comprises the assert signal that is propagated toward the root cell.

**7.** A computer system as defined in claim 6 in which each logic cell further includes a ready indication distribution circuit including a latch (35) that latches the ready indication from its parent logic cell in response to a clock signal and that transmits the latched ready indication to its children to thereby propagate the ready indication from the root logic cell to the leaf logic cells, the leaf logic cells transmitting the ready indications latched thereby to the alignment state circuits connected thereto.

**8.** A computer system as defined in claim 1 further comprising an interconnection means (40) for transferring messages among said processors, said interconnection means further generating a status information signal indicating a selected status condition ("Empty"), said alignment network further generating the alignment indication for each said processor in response to said status information signal.

**9.** A method of controlling a computer system comprising a plurality of processors (10), each processing a separate instruction stream, each instruction stream comprising instructions of a plurality of instruction types including an alignment request type, an alignment test type, and at least one other instruction type, and each instruction stream including at least one instruction of the alignment request type situated in the instruction stream to be executed at one point in time, at least one instruction of the alignment test type situated in the instruction stream to be executed at a later point in time than the instruction of the alignment request type, and at least some instruction streams having an instruction of another instruction type situated for execution at a point in time between execution of the instruction of the alignment request type and the instruction of the alignment test type, the method to bring said processors into alignment comprising the steps of:

A. each of said processors upon execution of an instruction from its respective instruction stream of said alignment request type generating a request indication and thereafter continuing execution of instructions from its respective instruction stream,

B. each of said processors, upon execution of an instruction from its respective instruction stream of said alignment test type, being disabled from processing subsequent instructions in its instruction stream in the absence of an alignment indication; and

C. generating said alignment indication when all of said processors have generated said request indication, thereby to enable said processors to execute instructions from their respective instruction streams following the instruction of said alignment test type.

**Patentansprüche**

**1.** Computersystem (Fig. 1), das umfaßt:

I. eine Vielzahl von Prozessoren (10), die jeweils einen separaten Befehlsstrom verarbeiten, wobei

1. jeder Befehlsstrom eine Abfolge von Befehlen einer Vielzahl verschiedener Befehlstypen einschließlich eines Synchronisieranforderungstyps umfaßt,

2. wenigstens ein Befehlsstrom weiterhin wenigstens einen Befehl eines anderen Typs enthält, der in dem Befehlsstrom so angeordnet ist, daß er zu einem späteren Zeitpunkt als der Befehl des Synchronisieranforderungstyps ausgeführt wird, und auf den ein Befehl eines Synchronisierprüftyps folgt,

wobei jeder Prozessor aufweist:
eine Einrichtung, die eine Synchronisieranforderungsanzeige erzeugt, während ein Befehl des Synchronisieranforderungstyps verarbeitet wird, eine Einrichtung, die eine Synchronisierprüfanzeige erzeugt, während ein Befehl des Synchronisierprüftyps verarbeitet wird, eine Einrichtung, die das Verarbeiten von Befehlen nach dem Befehl des Synchronisierprüftyps unterdrückt, bis der Prozessor eine Synchronisieranzeige empfängt; und

II. ein Synchronisiernetz (20,30,34,37), das eine Synchronisieranzeige für jeden der Prozessoren in Reaktion auf den Empfang einer Synchronisierprüfanzeige von selbigen nach dem Erzeugen von Synchronisieranforderungsanzeigen durch alle der Prozessoren erzeugt.

**2.** System nach Anspruch 1, wobei Befehlsströme aller der Prozessoren wenigstens einen Befehl eines anderen Typs enthalten, der in dem Befehlsstrom so angeordnet ist, daß er zu einem späteren Zeitpunkt als der Befehl des Synchronisieranforderungstyps ausgeführt wird, und auf den ein Befehl eines Synchronisierprüftyps folgt.

**3.** Computersystem nach Anspruch 1, wobei das Synchronisiernetz umfaßt:

I. zu jedem Prozessor gehörend:

1. eine Synchronisierzustandsschaltung (26) mit einem ersten Zustand, einem zweiten Zustand, in dem sie eine Anforderung zum Synchronisieren erzeugt, und einem dritten Zustand, in dem sie eine Synchronisieranzeige erzeugt;

2. eine Zustandssteuerschaltung (22,23,24), die die Synchronisierzustandsschaltung in die Lage versetzt:

a) von dem ersten Zustand in den zweiten Zustand überzugehen und eine Anforderung zum Synchronisieren in Reaktion darauf zu erzeugen, daß der zugehörige Prozessor einen Befehl des Synchronisieranforderungstyps in seinem Befehlsstrom empfängt,

b) von dem zweiten Zustand in den dritten Zustand überzugehen und eine Synchronisieranzeige in Reaktion darauf zu erzeugen, daß die Freigabe eines Bereitschaftssignals mit dem Empfang eines Befehls des Synchronisierprüftyps durch den Prozessor in seinem Befehlsstrom zusammenfällt, und

c) in Reaktion auf das Negieren des Bereitschaftssignals von dem dritten Zustand in den ersten Zustand überzugehen; und

II. eine Koinzidenzprüfeinrichtung (30,34,37), die das Bereitschaftssignal in Reaktion darauf freigibt, daß die zu allen der Prozessoren gehörende Synchronisierzustandseinrichtung Anforderungen zum Synchronisieren erzeugt, und die ansonsten das Bereitschaftssignal in einem negierten Zustand hält.

**4.** Computersystem nach Anspruch 3, wobei die Koinzidenzprüfeinrichtung das Bereitschaftssignal als die Koinzidenz von Anforderungen zum Synchronisieren von allen Prozessoren erzeugt.

**5.** Computersystem nach Anspruch 4, wobei die Koinzidenzprüfeinrichtung eine Vielzahl von Logikzellen (30) umfaßt, die in einer Baumstruktur miteinander verbunden sind, die eine Wurzel-Logikzelle (in Fig. 1 die einzelne Logikzelle 30 am oberen Ende des "Baums") sowie eine Vielzahl von Blatt-Logikzellen (in Fig. 1 die Gruppe von Logikzellen 30, die direkt mit den Synchronisiereinheiten 20 verbunden sind) umfaßt, wobei jede Logikzelle eine Koinzidenzschaltung (33) enthält, die ein Ausgangssignal erzeugt, das in Reaktion auf den Empfang von Eingangssignalen von einer Vielzahl untergeordneter Einheiten zu ihrer übergeordneten Einheit gekoppelt wird, wobei jede Blatt-Zelle als Eingangssignale Synchronisieranforderungssignale ("Freigeben" in Fig. 2) von einer vorgegebenen Anzahl von Synchronisierzustandsschaltungen hat und als Ausgangssignal ein Freigebesignal ("Freigeben 34") erzeugt, die Logikzellen die Freigebesignale zu der Wurzel-Zelle weiterleiten, wobei die Wurzel-Logikzelle eine BereitschaftsanzeigeErzeugungsschaltung (34,37) enthält, die die Bereitschaftsanzeige zum Koppeln zu allen der Synchronisierzustandssteuerschaltungen erzeugt.

**6.** Computersystem nach Anspruch 5, wobei jede Logikzelle weiterhin eine Latch-Schaltung (36) enthält, die das Ausgangssignal von der Koinzidenzschaltung in Reaktion auf ein Taktsignal speichert, wobei die Latch-Schaltung ein Latch-Ausgangssignal erzeugt, das das Freigebesignal umfaßt, das zu der Wurzel-Zelle weitergeleitet wird.

**7.** Computersystem nach Anspruch 6, wobei jede Logikzelle weiterhin eine Bereitschaftsanzeige-Verteilungsschaltung einschließlich einer Latch-Einrichtung (35) enthält, die die Bereitschaftsanzeige von ihrer Stamm-Logikzelle in Reaktion auf ein Taktsignal speichert und die die Latch-Bereitschaftsanzeige zu ihren untergeordneten Einheiten überträgt, um so die Bereitschaftsanzeige von der Wurzel-Logikzelle zu den Blatt-Logikzellen weiterzuleiten, wobei die Blatt-Logikzellen die dadurch gespeicherten Bereitschaftsanzeigen zu den damit verbundenen Synchronisierzustandsschaltungen übertragen.

**8.** Computersystem nach Anspruch 1, das weiterhin eine Zwischenverbindungseinrichtung (40) umfaßt, die Mitteilungen zwischen den Prozessoren überträgt, wobei die Zwischenverbindungseinrichtung weiterhin ein Statusinformationssignal erzeugt, das einen ausgewählten Statuszustand ("Leer") anzeigt, wobei das Synchronisiernetz weiterhin in Reaktion auf das Statusinformationssignal die Synchronisieranzeige für jeden Prozessor erzeugt.

9. Verfahren zum Steuern eines Computersystems, das eine Vielzahl von Prozessoren (10) umfaßt, die jeweils einen separaten Befehlsstrom verarbeiten, wobei jeder Befehlsstrom Befehle einer Vielzahl von Befehlstypen einschließlich eines Synchronisieranforderungstyps, eines Synchronisierprüftyps sowie wenigstens eines anderen Befehlstyps umfaßt und jeder Befehlsstrom wenigstens einen Befehl des Synchronisieranforderungstyps enthält, der in dem Befehlsstrom so angeordnet ist, daß er zu einem bestimmten Zeitpunkt ausgeführt wird, wenigstens einen Befehl des Synchronisierprüftyps, der in dem Befehlsstrom so angeordnet ist, daß er zu einem späteren Zeitpunkt als der Befehl des Synchronisieranforderungstyps ausgeführt wird, und wenigstens einige Befehlsströme einen Befehl eines anderen Befehlstyps aufweisen, der so angeordnet ist, daß er zu einem Zeitpunkt zwischen dem Ausführen des Befehls des Synchronisieranforderungstyps und des Befehls des Synchronisierprüftyps ausgeführt wird, wobei das Verfahren zum Synchronisieren der Prozessoren die folgenden Schritte umfaßt:

I. das Erzeugen einer Anforderungsanzeige durch jeden der Prozessoren nach dem Ausführen eines Befehls des Synchronisieranforderungstyps aus seinem jeweiligen Befehlsstrom und das anschließende Fortsetzen des Ausführens von Befehlen aus seinem jeweiligen Befehlsstrom,

II. das Verhindern des Verarbeitens anschließender Befehle in seinem Befehlsstrom durch jeden der Prozessoren nach dem Ausführen eines Befehls vom Synchronisierprüftyp aus seinem jeweiligen Befehlsstrom beim Nichtvorhandensein einer Synchronisieranzeige; und

III. das Erzeugen der Synchronisieranzeige, wenn alle Prozessoren die Anforderungsanzeige erzeugt haben, um so die Prozessoren in die Lage zu versetzen, nach dem Befehl des Synchronisierprüftyps Befehle aus ihren jeweiligen Befehlsströmen auszuführen.

## Revendications

1. Système informatique (figure 1) comprenant:

A. une pluralité de processeurs (10), chacun pour traiter un flot d'instructions séparé,

(i) chaque flot d'instructions comprenant une séquence d'instructions d'une pluralité de divers types d'instruction incluant un type de requête d'alignement,
(ii) au moins un flot d'instructions incluant en outre, située dans le flot d'instructions à exécuter à un moment postérieur à l'instruction du type de requête d'alignement, au moins une instruction d'un autre type suivie d'une instruction de type de test d'alignement, chaque processeur ayant

des moyens pour générer une indication de requête d'alignement tout en traitant une instruction dudit type de requête d'alignement, des moyens pour générer une indication de test d'alignement tout en traitant une instruction dudit type de test d'alignement, des moyens pour inhiber le traitement d'instructions après ladite instruction du type de test d'alignement jusqu'à un moment après que le processeur a reçu une indication d'alignement,
et
B. un réseau d'alignement (20, 30, 34, 37) pour générer une indication d'alignement pour chacun desdits processeurs en réponse à la réception de celui-ci d'une indication de test d'alignement suite à la génération d'indications de requête d'alignement par tous lesdits processeurs.

2. Système selon la revendication 1, dans lequel des flots d'instructions de tous lesdits processeurs incluent, située dans le flot d'instructions à exécuter à un moment postérieur à l'instruction du type de requête d'alignement, au moins une instruction d'un autre type suivie d'une instruction d'un type de test d'alignement.

3. Système informatique selon la revendication 1, dans lequel ledit réseau d'alignement comprend:

A. associé à chaque processeur:

(i) un circuit d'état d'alignement (26) ayant un premier état, un deuxième état dans lequel il génère une requête d'alignement, et un troisième état dans lequel il génère une indication d'alignement;

(ii) un circuit de commande d'état (22, 23, 24) pour permettre audit circuit d'état d'alignement de:

a. passer dudit premier état audit deuxième état afin de générer ainsi une requête d'alignement en réponse à la réception par le processeur associé d'une instruction, dans son flot d'instructions, du type de requête d'alignement,
b. passer dudit deuxième état audit troisième état afin de générer ainsi une indication d'alignement en réponse à une coïncidence de l'affirmation d'un signal prêt et à la réception par le processeur d'une instruction, dans son flot d'instructions, du type de test d'alignement, et
c. passer dudit troisième état audit premier état en réponse à une négation dudit signal prêt; et

B. des moyens de test de coïncidence (30, 34, 37) pour affirmer ledit signal prêt en réponse auxdits moyens d'état d'alignement associés à tous lesdits processeurs générant des requêtes d'alignement, et autrement pour maintenir ledit signal prêt dans une condition rendue négative.

4.  Système informatique selon la revendication 3, dans lequel lesdits moyens de test de coïncidence génèrent ledit signal prêt comme la coïncidence de requêtes d'alignement de la part de tous lesdits processeur.

5.  Système informatique selon la revendication 4, dans lequel lesdits moyens de test de coïncidence compressent une pluralité de cellules logiques (30) connectées dans une structure arborescente définissant une cellule logique racine (sur la figure 1, la cellule logique unique 30 en haut de "l'arbre") et une pluralité de cellules logiques feuilles (sur la figure 1, l'ensemble de cellules logiques 30 reliées directement aux unités d'alignement 20), chaque cellule logique incluant un circuit de coïncidence (33) qui génère un signal de sortie qui est couplé à son parent en réponse à la réception de signaux d'entrée de la part d'une pluralité d'enfants, chaque cellule feuille ayant comme signaux d'entrée des signaux de requête d'alignement ("affirmatif" sur la figure 2) à partir d'un nombre prédéterminé de circuits d'état d'alignement et générant comme signal de sortie un signal affirmatif ("affirmatif 34"), les cellules logiques propageant les signaux affirmatifs jusqu'à la cellule racine, la cellule logique racine incluant un circuit de génération d'indication prêt (34, 37) pour générer l'indication prêt pour coupler tous lesdits circuits de commande d'état d'alignement.

6.  Système informatique selon la revendication 5, dans lequel chaque cellule logique inclut en outre un circuit de verrouillage (36) pour verrouiller le signal de sortie par rapport audit circuit de coïncidence en réponse à un signal d'horloge, le circuit de verrouillage générant un signal de sortie verrouillé qui comprend le signal affirmatif qui est propagé vers la cellule racine.

7.  Système informatique selon la revendication 6, dans lequel chaque cellule logique inclut en outre un circuit de distribution d'indication prêt incluant un verrouillage (35) qui verrouille l'indication prêt par rapport à sa cellule logique parent en réponse à un signal d'horloge et qui transmet l'indication prêt verrouillée à ses enfants afin de propager ainsi l'indication prêt depuis la cellule logique racine jusqu'aux cellules logiques feuilles, les cellules logiques feuilles transmettant les indications prêt ainsi verrouillées sur les circuits d'état d'alignement reliés à celles-ci.

8.  Système informatique selon la revendication 1, comprenant en outre des moyens d'interconnexion (40) pour transférer des messages parmi lesdits processeurs, lesdits moyens d'interconnexion générant en outre un signal d'information d'état indiquant une condition d'état choisi ("vide"), ledit réseau d'alignement générant en outre l'indication d'alignement pour chacun desdits processeurs en réponse audit signal d'information d'état.

9.  Procédé d'exploitation d'un système informatique comprenant une pluralité de processeurs (10), chacun traitant un flot d'instructions séparé, chaque flot d'instructions comprenant des instructions d'une pluralité de types d'instruction incluant un type de requête d'alignement, un type de test d'alignement, et au moins un autre type d'instruction, et chaque flot d'instructions incluant au moins une instruction du type de requête d'alignement, située dans le flot d'instructions à exécuter à un moment donné, au moins une instruction du type de test d'alignement, située dans le flot d'instructions à exécuter à un moment postérieur à l'instruction du type de requête d'alignement, et au moins certains flots d'instructions ayant une instruction d'un autre type d'instruction, située pour être exécutée à un moment entre l'exécution de l'instruction du type de requête d'alignement et l'instruction du type de test d'alignement, le procédé consistant à amener lesdits processeurs en alignement comprenant les étapes consistant à:

A. générer par chacun desdits processeurs, après exécution d'une instruction de son flot d'instructions respectif dudit type de requête d'alignement, une indication de requête et ensuite continuer l'exécution des instructions de son flot d'instructions respectif,

B. empêcher chacun desdits processeurs, après exécution d'une instruction de son flot d'instructions respectif dudit type de test d'alignement, de traiter des instructions ultérieures dans son flot d'instructions en l'absence d'une indication d'alignement; et

C. générer ladite indication d'alignement quand tous lesdits processeurs ont généré ladite indication de requête, pour permettre ainsi auxdits processeurs d'exécuter des instructions de leurs flots d'instructions respectifs suite à l'instruction dudit type de test d'alignement.

# FIG. 1

# FIG. 2

# FIG. 3

FIG. 4

# FIG. 5